# EUROPEAN PATENT APPLICATION

(11) **EP 4 780 086 A1**
(43) Date of publication of application: **22.07.2026**
(21) Application number: 24870885.1
(22) Date of filing: 26.09.2024
(51) Int. Cl.: H04W 52/02

(54) **COMMUNICATION METHOD AND APPARATUS**

(30) Priority: 28.09.2023 CN 202311284560
(71) Applicant: HUAWEI TECHNOLOGIES CO., LTD., Shenzhen 518129 (CN)
(72) Inventor: HAN, Feng, Shenzhen, Guangdong 518129 (CN); MA, Chuan, Shenzhen, Guangdong 518129 (CN); YANG, Xudong, Shenzhen, Guangdong 518129 (CN); LIU, Heng, Shenzhen, Guangdong 518129 (CN)
(74) Representative: MERH-IP Matias Erny Reichl Hoffmann Patentanwälte PartG mbB
(86) International application number: PCT/CN2024/121472
(87) International publication number: WO 2025/067345

(57) **Abstract**

A communication method and apparatus relate to the communication field. In the method, an uplink wake-up signal is sent, where the uplink wake-up signal is used for waking up a first cell, the uplink wake-up signal carries first indication information, and the first indication information indicates an expected periodicity and/or beam of a synchronization signal/PBCH block of the first cell, and the synchronization signal/PBCH block and/or a system information block of the first cell are/is monitored. According to the foregoing method, the first cell can be woken up, to better satisfy a requirement of a terminal device.

## Description

### CROSS-REFERENCE TO RELATED APPLICATIONS

This application claims priority to Chinese Patent Application No. 202311284560.X, filed with the China National Intellectual Property Administration on September 28, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the application of a 5th generation (5th generation, 5G) mobile communication technology in various industries and the popularization of the 5G mobile communication technology in various geographical areas, the 5G technology increasingly needs to process more advanced services and applications. In addition, 5G networks are also becoming denser, using more antennas, larger bandwidths, and more frequency bands. In such a context, how to improve network energy saving in a 5G system becomes one of main research content in the industry.

Currently, most energy consumption in the 5G system comes from a radio access network, especially an active antenna unit. Currently, power consumption of the radio access device may be divided into two parts: dynamic power consumption and static power consumption. The dynamic power consumption is generated only when data transmitting/receiving is performed, and the static power consumption is continuously generated even when data transmitting/receiving is not performed. Therefore, it is necessary to introduce a technology for reducing static power consumption without affecting user performance.

Currently, a terminal device may send an uplink wake-up signal to wake up a base station. However, how to design the uplink wake-up signal and a related mechanism need to be further discussed.

### SUMMARY

This application provides a communication method and apparatus, to flexibly wake up a base station and satisfy a requirement of a terminal device.

According to a first aspect, this application provides a communication method. The method may be performed by a terminal device or a module (for example, a chip) in the terminal device. The method includes: sending an uplink wake-up signal, where the uplink wake-up signal is used for waking up a first cell, the uplink wake-up signal carries first indication information, and the first indication information indicates an expected periodicity and/or beam of a synchronization signal/PBCH block of the first cell; and monitoring the synchronization signal/PBCH block and/or a system information block of the first cell.

According to the foregoing method, the terminal device sends the uplink wake-up signal, so that the first cell can be woken up. The uplink wake-up signal includes the first indication information, and the first indication information indicates the periodicity and/or the beam of the synchronization broadcast that are/is expected by the terminal device, so that a network device can be notified of the periodicity and/or the beam of the synchronization broadcast that are/is expected by the terminal device, to enable a synchronization signal/PBCH block broadcast by the network device to better satisfy a requirement of the terminal device.

In a possible design, the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

In a possible design, the uplink wake-up signal is sent based on configuration information of the uplink wake-up signal during sending of the uplink wake-up signal.

In a possible design, the configuration information of the uplink wake-up signal includes at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

In a possible design, the waveform information of the uplink wake-up signal indicates that a waveform of the uplink wake-up signal is any one of the following: a harmonized waveform of on-off keying OOK and orthogonal frequency division multiplexing OFDM, multicarrier amplitude shift keying ASK, multicarrier frequency shift keying FSK, or OFDM.

In a possible design, the configuration information of the uplink wake-up signal further includes first information, the first information includes at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

According to the foregoing design, the terminal device determines, based on the first information, whether to send the uplink wake-up signal, and the terminal device sends the uplink wake-up signal when the terminal device satisfies any one or more pieces of information included in the first information.

In a possible design, the configuration information of the uplink wake-up signal is carried in one of the following: a broadcast message, a downlink low-power synchronization signal, a downlink wake-up signal, or radio resource control RRC signaling.

In a possible design, after the uplink wake-up signal is sent, a random access request message is sent to the first cell based on the synchronization signal/PBCH block and/or the system information block of the first cell that are/is detected.

In a possible design, after the uplink wake-up signal is sent, the random access request message is sent to the first cell if a first condition is satisfied, where the first condition includes: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected.

According to the foregoing design, after the terminal device sends the uplink wake-up signal, if the first condition is satisfied, the terminal device may directly send the random access request message to the first cell, to wake up the first cell.

In a possible design, after the uplink wake-up signal is sent, the random access request message is sent to the second cell if a first condition is satisfied, where the first condition includes: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected; and an identifier of the first cell is sent to the second cell after a random access procedure is completed.

According to the foregoing design, after the terminal device sends the uplink wake-up signal, if the first condition is satisfied, the terminal device may send the random access request message to the second cell, and wake up the first cell via the second cell.

In a possible design, the second cell is a cell reselected by the terminal device or a specified cell.

In a possible design, third indication information is received from the first cell or a third cell, where the third indication information indicates at least one of the following: information about a time-frequency resource occupied by the random access request message, a root sequence index of the random access request message, a random access sequence index, or an association configuration between a beam of the downlink low-power synchronization signal and a random access sequence.

In a possible design, after the uplink wake-up signal is sent, a random access response message is received from the first cell based on the synchronization signal/PBCH block and/or the system information block of the first cell that are/is detected, where the random access response message includes information about the uplink wake-up signal.

According to the foregoing design, the terminal device does not need to send the random access request message, and the terminal device sends only the uplink wake-up signal. The uplink wake-up signal can implement a function of the random access request message, to reduce a delay of network access of the terminal device.

In a possible design, the information about the uplink wake-up signal includes all or part of information carried in the uplink wake-up signal sent by the terminal device, or a sequence index of the uplink wake-up signal.

According to a second aspect, this application provides a communication method. The method may be performed by a network device or a module (for example, a chip) in the network device. The method includes: receiving an uplink wake-up signal, where the uplink wake-up signal is used for waking up a first cell, the uplink wake-up signal carries first indication information, and the first indication information indicates an expected periodicity and/or beam of a synchronization signal/PBCH block of the first cell; and broadcasting the synchronization signal/PBCH block and/or a system information block of the first cell.

According to the foregoing method, the network device receives the uplink wake-up signal, and the network device may broadcast the synchronization signal/PBCH block and/or the system information block of the first cell, to wake up the first cell. In addition, the uplink wake-up signal includes the first indication information, and the first indication information indicates the periodicity and/or the beam of the synchronization broadcast that are/is expected by the terminal device, to enable a synchronization signal/PBCH block broadcast by the network device to better satisfy a requirement of the terminal device.

In a possible design, the uplink wake-up signal is received through a secondary receiver during receiving of the uplink wake-up signal.

In a possible design, before the synchronization signal/PBCH block is broadcast based on the uplink wake-up signal, a periodicity of the synchronization signal/PBCH block and/or an index of the synchronization signal/PBCH block are/is determined based on the first indication information.

In a possible design, the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

In a possible design, before the uplink wake-up signal is sent, configuration information of the uplink wake-up signal is sent.

In a possible design, the configuration information of the uplink wake-up signal includes at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

In a possible design, the waveform information of the uplink wake-up signal indicates that a waveform of the uplink wake-up signal is any one of the following: a harmonized waveform compatible with both OOK and OFDM, multicarrier ASK, multicarrier FSK, or OFDM.

In a possible design, the configuration information of the uplink wake-up signal further includes first information, the first information includes at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

In a possible design, the configuration information of the uplink wake-up signal is carried in one of the following: a broadcast message, a downlink low-power synchronization signal, a downlink wake-up signal, or radio resource control RRC signaling.

In a possible design, after the synchronization signal/PBCH block and/or the system information block of the first cell are/is broadcast based on the uplink wake-up signal, a random access response message is sent to the terminal device, where the random access response message includes information about the uplink wake-up signal.

In a possible design, the information about the uplink wake-up signal includes all or part of information carried in the uplink wake-up signal sent by the terminal device, or a sequence index of the uplink wake-up signal.

According to a third aspect, this application provides a communication apparatus. The apparatus includes a processing unit and a transceiver unit. The processing unit invokes the transceiver unit to: send an uplink wake-up signal, where the uplink wake-up signal is used for waking up a first cell, the uplink wake-up signal carries first indication information, and the first indication information indicates an expected periodicity and/or beam of a synchronization signal/PBCH block of the first cell; and monitor the synchronization signal/PBCH block and/or a system information block of the first cell.

In a possible design, the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

In a possible design, the transceiver unit is configured to send the uplink wake-up signal based on configuration information of the uplink wake-up signal during sending of the uplink wake-up signal.

In a possible design, the configuration information of the uplink wake-up signal includes at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

In a possible design, the waveform information of the uplink wake-up signal indicates that a waveform of the uplink wake-up signal is any one of the following: a harmonized waveform of OOK and OFDM, multicarrier amplitude shift keying ASK, multicarrier frequency shift keying FSK, or OFDM.

In a possible design, the configuration information of the uplink wake-up signal further includes first information, the first information includes at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

In a possible design, the configuration information of the uplink wake-up signal is carried in one of the following: a broadcast message, a downlink low-power synchronization signal, a downlink wake-up signal, or radio resource control RRC signaling.

In a possible design, the transceiver unit is configured to: after sending the uplink wake-up signal, send a random access request message to the first cell based on the synchronization signal/PBCH block and/or the system information block of the first cell that are/is detected.

In a possible design, the transceiver unit is configured to: after sending the uplink wake-up signal, send a random access request message to the first cell based on that the processing unit determines that a first condition is satisfied, where the first condition includes: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected.

In a possible design, the transceiver unit is configured to: after sending the uplink wake-up signal, send a random access request message to the second cell based on that the processing unit determines that a first condition is satisfied, where the first condition includes: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected; and send an identifier of the first cell to the second cell after a random access procedure is completed.

In a possible design, the second cell is a cell reselected by the terminal device or a specified cell.

In a possible design, the transceiver unit is configured to receive third indication information from the first cell or a third cell, where the third indication information indicates at least one of the following: information about a time-frequency resource occupied by the random access request message, a root sequence index of the random access request message, a random access sequence index, or an association configuration between a beam of the downlink low-power synchronization signal and a random access sequence.

In a possible design, the transceiver unit is configured to: after sending the uplink wake-up signal, receive a random access response message from the first cell based on the synchronization signal/PBCH block and/or the system information block of the first cell that are/is detected, where the random access response message includes information about the uplink wake-up signal.

In a possible design, the information about the uplink wake-up signal includes all or part of information carried in the uplink wake-up signal sent by the terminal device, or a sequence index of the uplink wake-up signal.

According to a fourth aspect, this application provides a communication apparatus. The apparatus includes a processing unit and a transceiver unit. The processing unit invokes the transceiver unit to: receive an uplink wake-up signal, where the uplink wake-up signal is used for waking up a first cell, the uplink wake-up signal carries first indication information, and the first indication information indicates an expected periodicity and/or beam of a synchronization signal/PBCH block of the first cell; and broadcast the synchronization signal/PBCH block and/or a system information block of the first cell.

In a possible design, the transceiver unit is configured to: receive the uplink wake-up signal through a secondary receiver during receiving of the uplink wake-up signal.

In a possible design, the processing unit is configured to: before broadcasting the synchronization signal/PBCH block based on the uplink wake-up signal, determine a periodicity of the synchronization signal/PBCH block and/or an index of the synchronization signal/PBCH block based on the first indication information.

In a possible design, the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

In a possible design, the transceiver unit is configured to: before sending the uplink wake-up signal, send configuration information of the uplink wake-up signal.

In a possible design, the configuration information of the uplink wake-up signal includes at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

In a possible design, the waveform information of the uplink wake-up signal indicates that a waveform of the uplink wake-up signal is any one of the following: a harmonized waveform of OOK and OFDM, multicarrier ASK, multicarrier FSK, or OFDM.

In a possible design, the configuration information of the uplink wake-up signal further includes first information, the first information includes at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

In a possible design, the configuration information of the uplink wake-up signal is carried in one of the following: a broadcast message, a downlink low-power synchronization signal, a downlink wake-up signal, or radio resource control RRC signaling.

In a possible design, the transceiver unit is configured to: after broadcasting the synchronization signal/PBCH block and/or the system information block of the first cell based on the uplink wake-up signal, send a random access response message to the terminal device, where the random access response message includes information about the uplink wake-up signal.

In a possible design, the information about the uplink wake-up signal includes all or part of information carried in the uplink wake-up signal sent by the terminal device, or a sequence index of the uplink wake-up signal.

According to a fifth aspect, this application provides a communication apparatus. The communication apparatus may be a first apparatus, a module or a unit (for example, a chip, a chip system, or a circuit) that is in the first apparatus and that is in one to one correspondence with the method/operations/steps/actions described in the first aspect/the second aspect, or an apparatus that can be used in combination with the first apparatus.

According to a sixth aspect, this application provides a communication device, including at least one processing element and at least one storage element. The at least one storage element is configured to store a program and data. The at least one processing element is configured to read and execute the program and the data that are stored in the storage element, so that the method provided in any one of the foregoing aspects of this application is implemented.

According to a seventh aspect, this application further provides a computer program. When the computer program runs on a computer, the computer is caused to perform the method according to any one of the foregoing aspects.

According to an eighth aspect, this application provides a communication apparatus. The apparatus includes an interface circuit. The interface circuit is configured to provide a program or input and/or output of instructions for at least one processor. The at least one processor is configured to execute the program or the instructions, so that the communication apparatus can implement the method according to any one of the foregoing aspects.

In a possible manner, the communication apparatus includes the at least one memory, and the at least one memory is configured to store the program or the instructions.

According to a ninth aspect, this application provides a computer storage medium. The storage medium stores a software program, and when the software program is read and executed by one or more processors, the method according to any one of the foregoing aspects may be implemented.

According to a tenth aspect, this application provides a computer program product including instructions. When the instructions are run on a computer, the computer is caused to perform the method in any one of the foregoing aspects.

According to an eleventh aspect, this application provides a chip system. The chip system includes at least one chip and a memory. The at least one chip is configured to read and execute a program stored in the memory, to implement the method according to any one of the first aspect.

According to a twelfth aspect, this application provides a communication system. The system includes at least one terminal device and a network device. The terminal performs the method according to any one of the first aspect, and the network device performs the method according to any one of the second aspect.

In this application, based on the implementations provided in the foregoing aspects, the implementations may be further combined to provide more implementations.

### BRIEF DESCRIPTION OF DRAWING

FIG. 1 is a diagram of an architecture of a mobile communication system to which an embodiment of this application is applied;
FIG. 2 is a diagram of beam sweeping according to this application;
FIG. 3 is a diagram of SSB sending according to this application;
FIG. 4 is a diagram of a solution 1 in a base station wake-up solution according to this application;
FIG. 5 is a diagram of a solution 2 in a base station wake-up solution according to this application;
FIG. 6 is an overview flowchart of a communication method according to this application;
FIG. 7A is a first diagram of a terminal device sending an uplink wake-up signal and a network device receiving the uplink wake-up signal according to this application;
FIG. 7B is a second diagram of a terminal device sending an uplink wake-up signal and a network device receiving the uplink wake-up signal according to this application;
FIG. 8 is a first flowchart of interaction between a terminal device and a network device after an uplink wake-up signal is sent in a scenario 1 according to this application;
FIG. 9 is a second flowchart of interaction between a terminal device and a network device after an uplink wake-up signal is sent in a scenario 1 according to this application;
FIG. 10 is a first flowchart of interaction between a terminal device and a network device after an uplink wake-up signal is sent in a scenario 2 according to this application;
FIG. 11 is a diagram of a terminal device satisfying a first condition according to this application;
FIG. 12 is a second flowchart of interaction between a terminal device and a network device after an uplink wake-up signal is sent in a scenario 2 according to this application;
FIG. 13 is a diagram of a periodicity of a RACH occasion and a periodicity of a UL-WUS occasion according to this application;
FIG. 14 is a diagram of a structure of a communication apparatus according to this application; and
FIG. 15 is a diagram of a structure of another communication apparatus according to this application.

### DESCRIPTION OF EMBODIMENTS

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

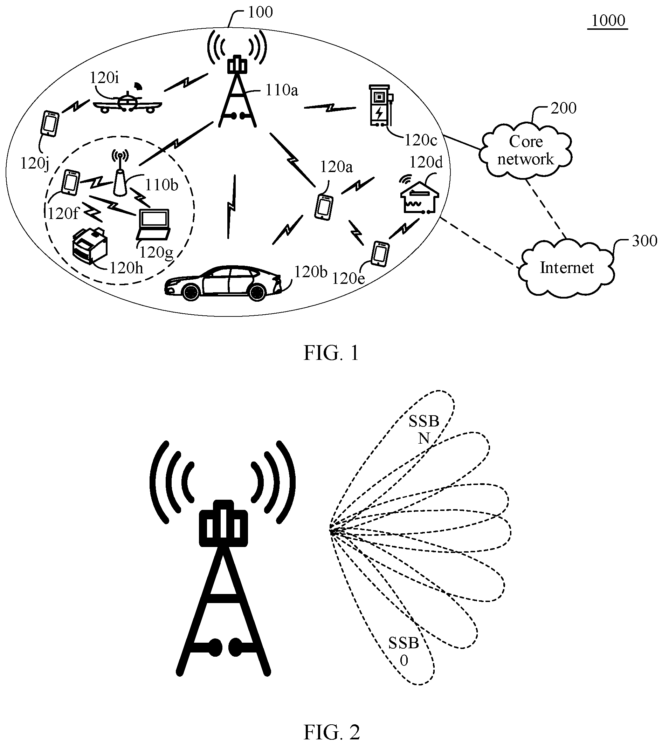

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not drawn in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the following provides descriptions by using an example in which the network device is a radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The network device and the terminal may be at fixed locations, or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For the terminal 120j that accesses the radio access network 100 via 120i, the uncrewed aerial vehicle 120i is a network device. However, for the network device 110a, 120i is a terminal. In other words, 110a and 120i communicate with each other according to a radio air interface protocol. Certainly, 110a and 120i may alternatively communicate with each other by using an interface protocol between network devices. In this case, compared with 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication between the network device and the terminal, between network devices, or between terminals may be performed through a licensed spectrum, or may be performed through an unlicensed spectrum, or may be performed through both a licensed spectrum and an unlicensed spectrum. Communication may be performed through a spectrum of 6 gigahertz (gigahertz, GHz) or below, or may be performed through a spectrum of 6 GHz or above. Alternatively, communication may be performed through both a spectrum of 6 GHz or below and a spectrum of 6 GHz or above. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal may alternatively be performed by a module (for example, a chip or a modem) in the terminal, or may be performed by an apparatus including the function of the terminal.

In embodiments of this application, the network device sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

It may be understood that, in embodiments of this application, a physical downlink shared channel (physical downlink shared channel, PDSCH), a physical downlink control channel (physical downlink control channel, PDCCH), a physical uplink control channel (physical uplink control channel, PUCCH), and a physical uplink shared channel (physical uplink shared channel, PUSCH) are merely examples of a downlink data channel, a downlink control channel, an uplink control channel, and an uplink data channel. In different systems and different scenarios, a data channel and a control channel may have different names. This is not limited in embodiments of this application.

The following describes basic technical concepts in this application.

### 1. Synchronization signal/PBCH block (SS/PBCH block, SSB)

The synchronization signal/PBCH block may also be referred to as a synchronization signal block. For example, in a NR system, the SSB includes a primary synchronization signal (primary synchronization signal, PSS), a secondary synchronization signal (secondary synchronization signal, SSS), a physical broadcast channel (physical broadcast channel, PBCH), and a demodulation reference signal (demodulation reference signal, DMRS) demodulated by using the PBCH. A beam corresponding to the SSB is referred to as an SSB beam. Each SSB may occupy four consecutive symbols in time domain, and occupy 20 resource blocks (resource blocks, RBs) in frequency domain.

A wireless design of a 5G air interface is based on beam management. Transmission and reception of uplink and downlink channels are based on beams. A base station transmits a narrow beam in a specific direction at a specific time point, and then changes a direction at a next time point and transmits the narrow beam again. By analogy, all areas can be covered. This process is referred to as beam sweeping. As shown in FIG. 2, different SSB indexes correspond to different beams or beam directions.

In the 5G air interface, beam measurement reference signals in use are shown in Table 1.

**Table 1**

| Phase | Downlink beam measurement reference signal | Uplink beam measurement reference signal |
|---|---|---|
| Initial access in an idle state and an inactive state | SSB | N/A, because UEs in an idle state and an inactive state have not accessed a network |
| Data transmission in a connected state | SSB and CSI-RS for beam management | Channel sounding reference signal (sounding reference signal, SRS) |

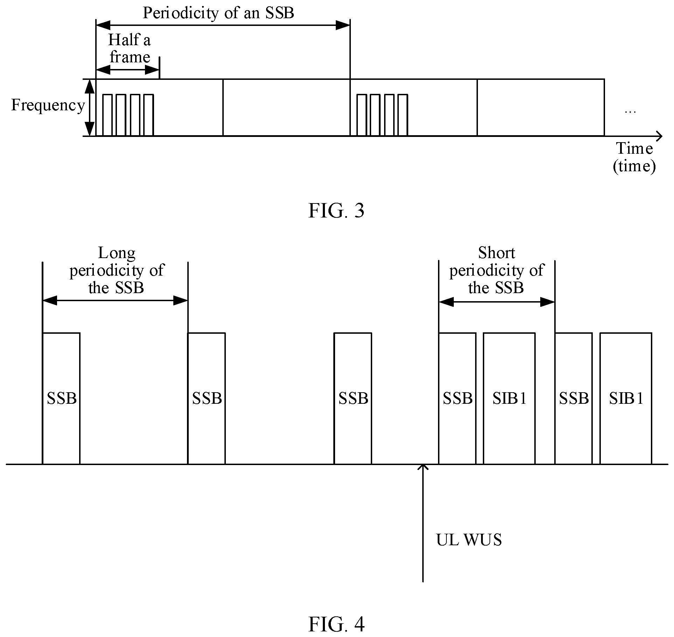

A sending moment of the SSB is in a unit of half a frame (that is, 5 ms), and the SSB is sent at a specific periodicity. A sending periodicity of the SSB may be 5 ms, 10 ms, 20 ms, 40 ms, 80 ms, or 160 ms. In NR, a plurality of SSB formats are defined. A maximum quantity of SSBs to be sent in half a frame (5 ms) of SSB sending is related to a frequency. For example, if the frequency is less than or equal to 3 GHz, the maximum quantity of SSBs to be sent is 4. If the frequency is greater than 3 GHz and less than or equal to 6 GHz, the maximum quantity of SSBs to be sent is 8. If the frequency is greater than 6 GHz, the maximum quantity of SSBs to be sent is 64. As shown in FIG. 3, the maximum quantity of SSBs to be sent is 4.

### 2. Initial camping and random access procedure

First, a terminal device performs detection on a synchronization signal/PBCH block. For example, the terminal device may obtain cell synchronization and cell identifier identification based on a PSS and/or an SSS. Further, the terminal receives a PBCH based on the detected PSS and/or SSS. For example, there is a resource mapping relationship between the PSS/SSS and the PBCH. The PBCH includes a master system information (master information block, MIB), and the MIB includes a system radio frame number, an initial control resource set (control resource set zero, CORESET) #0 and search space (search space, SS) #0 of a common PDCCH, where the CORESET#0 and the SS#0 respectively indicate a frequency-domain position and a time-domain position of common downlink control information (downlink control information, DCI) for scheduling reception of a system information block 1 (system information block 1, SIB1).

Therefore, the terminal device may perform, based on the SSB, detection on the common PDCCH or the common DCI for scheduling the SIB1, to obtain the SIB1, so as to complete camping in an idle state.

The SIB1 is necessary system information other than the MIB, and is also referred to as remaining necessary system information. The SIB1 mainly includes a paging configuration, a quantity of actual SSB transmit beams, a periodicity, and the like. In addition, the SIB1 further carries random access (random access, RACH) configuration information, and the RACH configuration information may indicate configuration information such as a RACH time-frequency resource and a preamble resource. Therefore, the terminal device may select a RACH occasion and a preamble (preamble) based on the SIB1, and then send a random access request message.

### 3. Main transceiver module (main radio, MR) and low power transceiver module (low power radio, LR)

The main transceiver module is a transceiver module configured to send or receive a normal signal or channel.

The low power transceiver module (low power radio, LR) may also be referred to as a secondary transceiver module, and is a transceiver module configured to send or receive a low-power signal/channel. The low power transceiver module consumes low power. Optionally, the low power transceiver module includes a wake-up signal receiver (wake-up receiver, WUR), and the wake-up signal receiver is a receiving module or a receiver configured to receive a low-power signal. For example, the low power transceiver module may be of one of the following three low-power receiver architectures: 1. an architecture having a radio frequency envelope detection function; 2. a heterodyne architecture having intermediate-frequency envelope detection; and 3. a homodyne/zero intermediate-frequency architecture having baseband envelope detection. The foregoing receiver architectures are considered to be applicable for an OOK modulation. Some architectures are applicable to other modulations, such as an FSK modulation.

### 4. Reduced capability (reduced capability) device

The reduced capability device may also be referred to as a RedCap (RedCap) device. For example, the reduced capability device supports a maximum channel bandwidth of 20 MHz in a frequency range (frequency range, FR) 1 and a maximum channel bandwidth of 100 MHz in an FR 2. An enhanced reduced capability device uses a baseband bandwidth of 5 MHz for a PDSCH (unicast and broadcast) and a PUSCH, and uses a radio-frequency bandwidth of 20 MHz for uplink and downlink. Alternatively, a supported peak data rate target is 10 Mbps. The FR 1 and the FR 2 are two categories of 5G frequency division. The FR 1 is a frequency band ranging from 410 MHz to 7125 MHz, and is also referred to as a low and medium frequency band. The FR 2 is a frequency band ranging from 24250 MHz to 52600 MHz, and is also referred to as a high frequency band, which is typically also referred to as a millimeter-wave band.

### 5. State of a cell

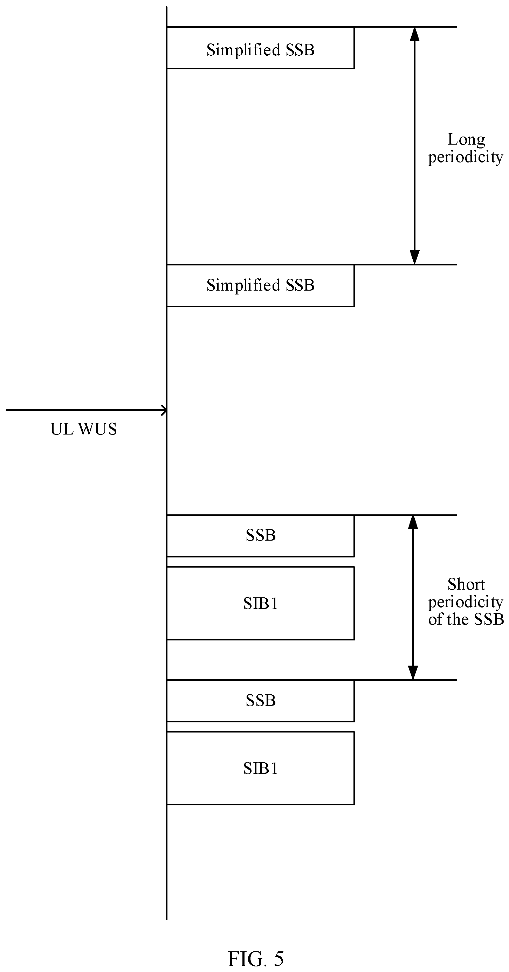

The state of the cell may also be referred to as a mode of the cell. Generally, the cell may be in a normal operating state. To save energy for the cell, the cell may also be in a sleep state. In a deep sleep state, the cell may be completely closed, and does not send any downlink physical signal or channel. In this case, the terminal device cannot obtain any signal sent by the cell through detection. In another case, the cell may be in a shallow sleep state or an energy saving state, and the cell may send a part of downlink physical signals or channels, for example, a long-periodicity SSB (shown in FIG. 4) or a simplified SSB (shown in FIG. 5), so that the terminal device can obtain the part of downlink physical signals or channels through detection.

The following describes several base station wake-up (or cell wake-up) solutions.

Solution 1: A base station may send a long-periodicity SSB (for example, 160 ms), so that a terminal device keeps downlink time-frequency synchronization. When the terminal device needs to initiate an uplink service, or the terminal device requests access, the terminal device may send an uplink wake-up signal (uplink wake-up signal, UL WUS) to the base station, to wake up the base station. After the base station is woken up, the base station may send a short-periodicity SSB (for example, 20 ms) and/or a SIB1, as shown in FIG. 4.

Solution 2: A base station sends only a simplified SSB, and the simplified SSB may be different from the foregoing SSB. For example, the simplified SSB is to simplify information carried in the foregoing SSB, and omit some unnecessary information, or the simplified SSB carries necessary information. For example, the simplified SSB may have no PBCH, or a PSS/SSS has a different sequence design. A terminal device may send an uplink wake-up signal to the base station, to wake up the base station. After the base station is woken up, the base station may send a short-periodicity SSB (for example, 20 ms) and/or a SIB1, as shown in FIG. 5.

It may be learned that, in the foregoing base station wake-up (or cell wake-up) solutions, a specific design of the uplink wake-up signal is not disclosed, and a sending mechanism of the uplink wake-up signal is not restricted.

Based on the network system architecture shown in FIG. 1 and the content described in the foregoing related technologies, embodiments of this application provide several possible communication methods. An example in which a network device and a terminal are used to perform the communication methods is used for description. For example, the network device may be the access network device 110a or the access network device 110b in FIG. 1. The terminal may be any terminal shown in the foregoing FIG. 1. In addition, it should be understood that the network device may be alternatively replaced with a communication apparatus having a function of the network device or a chip, a unit, or a module in the communication apparatus having the function of the network device. The terminal may be alternatively replaced with a communication apparatus having a function of the terminal, or a chip, a unit, or a module in the communication apparatus having the function of the terminal.

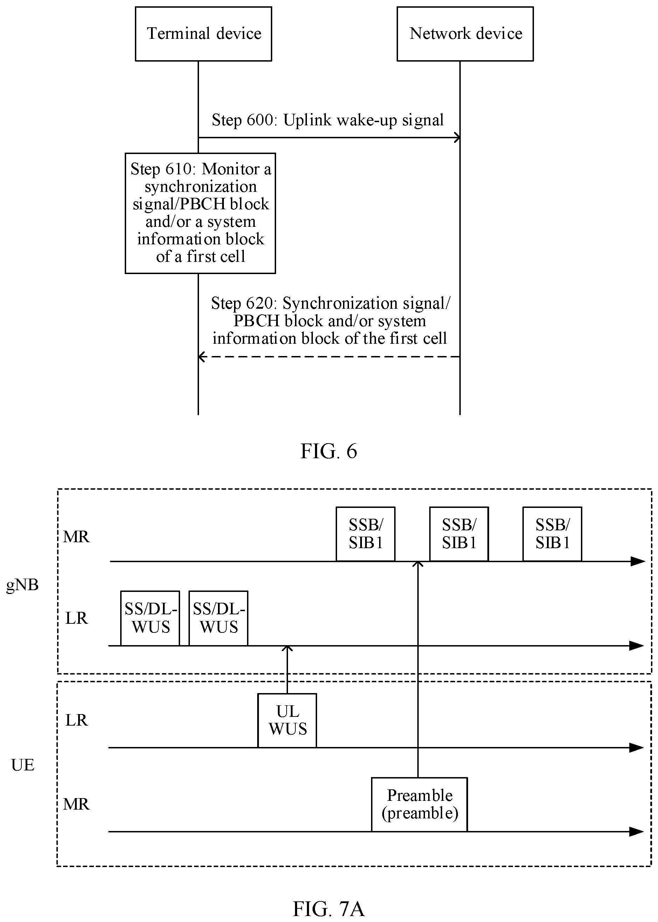

FIG. 6 is a possible schematic flowchart of a communication method according to an embodiment of this application. As shown in FIG. 6, the method includes the following steps.

Step 600: A terminal device sends an uplink wake-up signal.

For example, the uplink wake-up signal is used for waking up (waking up) a first cell. That the uplink wake-up signal is used for waking up the first cell may also be described as that the uplink wake-up signal is used for activating the first cell. The first cell may be a cell on which the terminal device camps, and a state of the first cell may be a sleep state or an energy saving state.

In a possible implementation, the uplink wake-up signal may carry first indication information, and the first indication information indicates an expected periodicity and/or beam of a synchronization signal/PBCH block of the first cell. In another possible implementation, the uplink wake-up signal may indicate or be mapped to the first indication information. For example, different uplink wake-up signal sequences may indicate expected periodicities of the synchronization signal/PBCH block and/or beams of the synchronization signal/PBCH block of the first cell.

In an example, the first indication information includes the expected periodicity of the synchronization signal/PBCH block of the first cell, for example, 20 ms.

Alternatively, the first indication information indicates whether the expected periodicity of the synchronization signal/PBCH block of the first cell is greater than or equal to a first periodicity. The first periodicity may be a periodicity specified in a protocol or a periodicity indicated by the first cell or another cell to the terminal device.

Alternatively, the first indication information indicates whether the expected periodicity of the synchronization signal/PBCH block of the first cell is less than a second periodicity. The second periodicity may be a periodicity of a long-periodicity synchronization signal/PBCH block, or a periodicity of a simplified synchronization signal/PBCH block, or a periodicity of a downlink low-power synchronization signal, or a periodicity specified in a protocol, or a periodicity indicated by the first cell or another cell to the terminal device. For example, the second periodicity may be a periodicity of the long-periodicity SSB in FIG. 4, or a periodicity of the simplified SSB in FIG. 5, or a periodicity of a synchronization signal/PBCH block when a cell is in a sleep state or an energy saving state.

In another example, the first indication information may include an expected index of the synchronization signal/PBCH block of the first cell, and the expected index of the synchronization signal/PBCH block of the first cell may be used for determining an expected beam or beam direction of the synchronization signal/PBCH block of the first cell. For example, with reference to FIG. 4 or FIG. 5, it may be learned that, before sending the uplink wake-up signal, the terminal device may receive a long-periodicity synchronization signal/PBCH block or a simplified synchronization signal/PBCH block. It may be learned from FIG. 2 that different SSB indexes correspond to different beam directions, and received-signal strength of the terminal device for SSBs in different beam directions is different. Therefore, the terminal device may use a beam corresponding to an SSB with strong signal strength as an expected beam or beam direction of the synchronization signal/PBCH block of the first cell. For example, an SSB index (index) included in the first indication information is one or more integers of "0 to 63", or one or more integers of "0 to 16".

In another example, different uplink wake-up signal sequences may indicate expected indexes of the synchronization signal/PBCH block of the first cell. For example, an uplink wake-up signal sequence 1 indicates an expected index 1 of the synchronization signal/PBCH block of the first cell, and an uplink wake-up signal sequence 2 indicates an expected index 2 of the synchronization signal/PBCH block of the first cell.

In a possible design, the uplink wake-up signal further carries second indication information, and the second indication information indicates at least one of the following: a second cell that is expected to be woken up, whether an uplink data buffer size of the terminal device is greater than or equal to a buffer threshold, whether a path loss of the terminal device is greater than or equal to a path loss threshold, or whether the terminal device is a reduced capability device.

The following briefly describes the foregoing content.

### a. Second cell that is expected to be woken up

It may be understood that there may be one or more second cells. The second cell is different from the first cell. For example, the first cell and the second cell may belong to a same cell group. For another example, the second cell is a neighboring cell of the first cell.

### b. Whether the uplink data buffer size of the terminal device is greater than or equal to the buffer threshold

For example, when the second indication information indicates whether the uplink data buffer size of the terminal device is greater than or equal to the buffer threshold, a network device may learn whether the uplink data buffer size of the terminal device is greater than or equal to the buffer threshold. For example, if the uplink data buffer size of the terminal device is greater than or equal to the buffer threshold, the network device may determine to wake up the first cell; or if the uplink data buffer size of the terminal device is less than the buffer threshold, the network device may not wake up the first cell.

### c. Whether the path loss of the terminal device is greater than or equal to the path loss threshold

For example, when the second indication information indicates whether the path loss of the terminal device is greater than or equal to the path loss threshold, the network device may learn whether the path loss of the terminal device is greater than or equal to the path loss threshold. For example, the network device may further determine transmit power for the synchronization signal/PBCH block of the first cell.

### d. Whether the terminal device is a reduced capability device

For example, when the second indication information indicates whether the terminal device is a reduced capability device, if the terminal device is a reduced capability device, and the first cell is woken up, for example, the first cell may directly reply with Msg2 (for example, a random access response (random access response, RAR) message). For example, the RAR occupies a bandwidth of 20 MHz. In other words, in this case, the terminal device does not need to send a random access request message (for example, a preamble), so that access complexity of the reduced capability device can be reduced.

It may be understood that a to d are merely examples, and are not intended to limit this application. The second indication information may further carry other content.

In a possible implementation, the second indication information includes a first information element, a second information element, and a third information element. The first information element may indicate whether the uplink data buffer size of the terminal device is greater than or equal to the buffer threshold. The first information element may occupy one bit. When a value of the one bit occupied by the first information element is 1, it indicates that the uplink data buffer size of the terminal device is greater than or equal to the buffer threshold. When a value of the one bit occupied by the first information element is 0, it indicates that the uplink data buffer size of the terminal device is less than the buffer threshold. Similarly, the second information element may occupy one bit. When a value of the one bit occupied by the second information element is 1, it indicates that the path loss of the terminal device is greater than or equal to the path loss threshold. When a value of the one bit occupied by the first information element is 0, it indicates that the path loss of the terminal device is less than the path loss threshold. The third information element may occupy one bit. When a value of the one bit occupied by the third information element is 1, it indicates that the terminal device is a reduced capability device. When a value of the one bit occupied by the third information element is 0, it indicates that the terminal device is not a reduced capability device.

In another possible implementation, when the uplink data buffer size of the terminal device is greater than or equal to the buffer threshold, the second indication information includes a fourth information element. The fourth information element indicates that the uplink data buffer size of the terminal device is greater than or equal to the buffer threshold. If the second indication information does not include the fourth information element, it indicates that the uplink data buffer size of the terminal device is less than the buffer threshold. Similarly, when the path loss of the terminal device is greater than or equal to the path loss threshold, the second indication information includes a fifth information element. The fifth information element indicates that the path loss of the terminal device is greater than or equal to the path loss threshold. If the second indication information does not include the fifth information element, it indicates that the path loss of the terminal device is less than the path loss threshold. When the terminal device is a reduced capability device, the second indication information includes a sixth information element. The sixth information element indicates that the terminal device is a reduced capability device. If the second indication information does not include the sixth information element, it indicates that the terminal device is not a reduced capability device.

For example, the uplink wake-up signal may carry 16-bit information. It is assumed that a bit index starts from 0. A bit 0 to a bit 3 indicate the expected periodicity of the SSB of the first cell, as shown in Table 2. A bit 4 to a bit 10 indicate an expected index of the SSB of the first cell. A bit 11 indicates whether the uplink data buffer size of the terminal device is greater than or equal to the buffer threshold. A bit 12 to a bit 14 indicate at least one of a network slice group identifier, a network slice identifier, an emergency service identifier, a data radio bearer identifier, or a logical channel identifier corresponding to a service initiated by the terminal device. A bit 15 indicates whether the path loss of the terminal device is greater than or equal to the path loss threshold. It may be understood that the foregoing bit allocation scheme is merely an example and is not intended to limit this application.

**Table 2**

| | |
|---|---|
| 000 | 640 ms |
| 001 | 160 ms |
| 010 | 80 ms |
| 011 | 40 ms |
| 100 | 20 ms |
| 101 | 10 ms |
| 110 | 5 ms |
| 111 | To be determined |

In another possible implementation, different uplink wake-up signal sequences indicate whether the uplink data buffer size of the terminal device is greater than or equal to the buffer threshold and/or whether the path loss of the terminal device is greater than or equal to the path loss threshold. For example, an uplink wake-up signal sequence 1 indicates that the uplink data buffer size of the terminal device is greater than or equal to the buffer threshold and/or the path loss of the terminal device is greater than or equal to the path loss threshold. An uplink wake-up signal sequence 2 indicates that the uplink data buffer size of the terminal device is less than the buffer threshold and/or the path loss of the terminal device is less than the path loss threshold.

For example, before step 600, the terminal device may receive configuration information of the uplink wake-up signal, so that the terminal device may send the uplink wake-up signal based on the configuration information of the uplink wake-up signal.

In a possible implementation, the configuration information of the uplink wake-up signal includes at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step (powerRampingStep) of the uplink wake-up signal, the buffer threshold, or the path loss threshold.

The following briefly describes the foregoing content.

### A. Waveform information of the uplink wake-up signal and quantity of bits carried in one symbol occupied by the uplink wake-up signal

For example, the waveform information of the uplink wake-up signal indicates that a waveform of the uplink wake-up signal is any one of the following: a harmonized waveform of on-off keying (on-off keying, OOK) and orthogonal frequency division multiplexing (orthogonal frequency division multiplexing, OFDM), multicarrier amplitude shift keying (amplitude shift keying, ASK), multicarrier frequency shift keying (frequency shift keying, FSK), or OFDM.

For example, a harmonized (harmonized) waveform of the OOK and the OFDM means that a specific OFDM sequence is transmitted on an OOK symbol.

For example, when the waveform of the uplink wake-up signal is the multicarrier ASK waveform, the uplink wake-up signal may be implemented in the following manner:
Manner 1: Each OFDM symbol carries one bit, and occupies L OFDM symbols.
Manner 2: Each OFDM symbol carries M bits in a frequency domain range, and occupies L OFDM symbols.
Manner 3: Multi-tone single bit (multi-tone single bit), occupying L OFDM symbols.
Manner 4: M bits are carried in a time domain range, and L OFDM symbols are occupied.

L is a positive integer, for example, L=4, and a value of L may be specified according to a protocol.

When the waveform of the uplink wake-up signal is the multicarrier FSK waveform, the uplink wake-up signal may be implemented in the following manner:
Manner 1: N subcarriers are divided into Q pairs of segments (segments), and each segment includes one or more carriers and occupies L OFDM symbols.
Manner 2: N subcarriers are divided into 2^{Q} pairs of segments, and each segment includes one or more carriers and occupies L OFDM symbols.

N and Q are positive integers, and Q indicates the quantity of bits carried in one symbol occupied by the uplink wake-up signal. For example, N=16, Q=2, and L=4. Values of N, Q, and L may be specified according to a protocol.

In addition, the uplink wake-up signal may also be carried by using a Zadoff Chu or an M sequence.

### B. Time domain resource information and frequency domain resource information of the uplink wake-up signal

For example, the time domain resource information of the uplink wake-up signal indicates at least one of a periodicity, duration, and an offset of the uplink wake-up signal. For example, the periodicity of the uplink wake-up signal may be 5 ms, 10 ms, 20 ms, 40 ms, 80 ms, 160 ms, 320 ms, 640 ms, or the like.

### C. Maximum quantity of times of sending the uplink wake-up signal

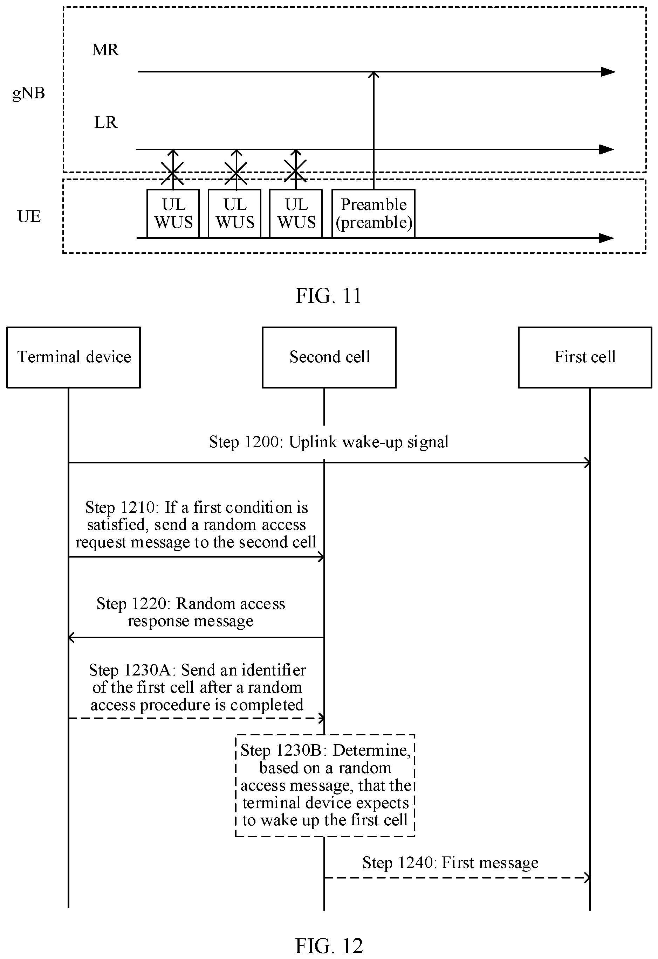

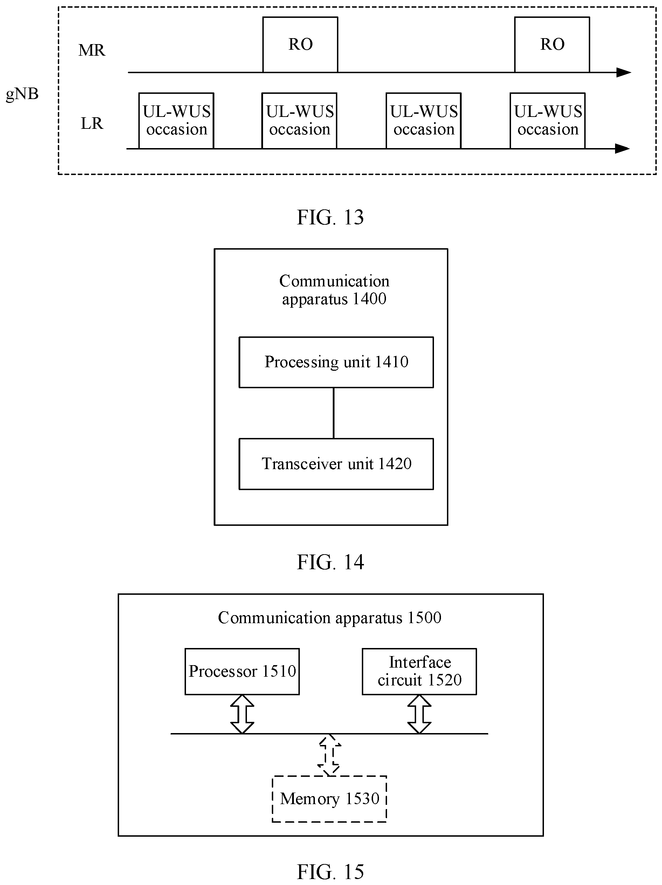

For example, when the terminal device does not obtain the synchronization signal/PBCH block and/or a system information block of the first cell through monitoring, the terminal device may determine, based on the maximum quantity of times of sending the uplink wake-up signal, whether to perform a related operation. For details, refer to the following embodiment shown in FIG. 11 or FIG. 13.

### D. Power ramping step of the uplink wake-up signal

For example, when the terminal device does not obtain the synchronization signal/PBCH block and/or the system information block of the first cell through monitoring, the terminal device may increase transmit power for the uplink wake-up signal based on the power ramping step of the uplink wake-up signal.

### E. Buffer threshold

For example, the terminal device may determine, based on the buffer threshold, whether the uplink data buffer size of the terminal device is greater than or equal to the buffer threshold. If the terminal device determines that the uplink data buffer size of the terminal device is greater than or equal to the buffer threshold, the terminal device may send the uplink wake-up signal. If the terminal device determines that the uplink data buffer size of the terminal device is less than the buffer threshold, the terminal device does not send the uplink wake-up signal until the uplink data buffer size of the terminal device is greater than or equal to the buffer threshold. For example, whether the uplink data buffer size of the terminal device is greater than or equal to the buffer threshold may be indicated by using the foregoing second indication information.

### F. Path loss threshold

For example, whether the path loss of the terminal device is greater than or equal to the path loss threshold may be determined by the terminal device based on the path loss threshold, and may be indicated by using the second indication information. For example, the path loss may be determined based on a long-periodicity synchronization signal/PBCH block, a simplified synchronization signal/PBCH block, or a downlink low-power synchronization signal received by the terminal device.

It may be understood that A to F are merely examples, and are not intended to limit this application. The configuration information of the uplink wake-up signal may further include other content. In addition, at least one of the foregoing A to F may be further specified according to a protocol.

In a possible implementation, the configuration information of the uplink wake-up signal may further include first information. The first information includes at least one of the following information: an access identifier (access identifier), a network slice group identifier, a network slice identifier, an emergency service identifier, a data radio bearer (data radio bearer, DRB) identifier, and a logical channel (logical channel ID) identifier. It may be understood that the first information may further include other content. This is not limited in this application. The first information is used by the terminal device to determine whether to send the uplink wake-up signal.

For example, the network slice group identifier may be a network slice as group identifier (network slice as group ID, NSAG ID), and the network slice identifier may be network slice selection assistance information (single network slice selection assistance information, S-NSSAI).

In an example, the first information may include the access identifier, and there may be one or more access identifiers. The access identifier included in the first information is an access identifier of a terminal device that is allowed to send an uplink wake-up signal. When an access identifier of the terminal device is the access identifier included in the first information, the terminal device sends the uplink wake-up signal. In addition, in a possible implementation, if the access identifier of the terminal device is the access identifier included in the first information, the uplink wake-up signal may further carry the access identifier of the terminal device.

In another example, the first information may include the network slice group identifier, and there may be one or more network slice group identifiers. When a network slice group identifier corresponding to a service initiated by the terminal device is the network slice group identifier included in the first information, the terminal device sends the uplink wake-up signal. In addition, in a possible implementation, if the network slice group identifier corresponding to the service initiated by the terminal device is the network slice group identifier included in the first information, the uplink wake-up signal may further carry the network slice group identifier corresponding to the service initiated by the terminal device. For example, the network slice group identifier may be indicated by using a bit 12 to a bit 14 in 16-bit information carried in the uplink wake-up signal.

It may be understood that the network slice group identifier may be alternatively replaced with the network slice identifier, an emergency service identifier, the data radio bearer identifier, or the logical channel identifier.

In an example, when the service initiated by the terminal device is an emergency service included in the first information, the terminal device sends the uplink wake-up signal. In another example, when the first information does not include the emergency service identifier, and even when the terminal device does not obtain the first information through monitoring, when the service initiated by the terminal device is an emergency service, the terminal device may directly send the uplink wake-up signal.

In an example, when a data radio bearer identifier corresponding to the service initiated by the terminal device is the data radio bearer identifier included in the first information, the terminal device sends the uplink wake-up signal. Alternatively, when a logical channel identifier corresponding to the service initiated by the terminal device is the logical channel identifier included in the first information, the terminal device sends the uplink wake-up signal.

In addition, in a possible implementation, if the access identifier of the terminal device is the access identifier included in the first information, the uplink wake-up signal may further carry the access identifier of the terminal device.

For example, the configuration information of the uplink wake-up signal is carried in one of the following: a broadcast message, a downlink low-power synchronization signal, a downlink wake-up signal, or radio resource control (radio resource control, RRC) signaling.

In an example, the broadcast message may carry configuration information of one or more uplink wake-up signals.

For example, as shown in Table 3, the broadcast message may indicate configuration information of uplink wake-up signals of one or more cells. A Cell ID list 1 or a physical cell identifier (physical cell identifier, PCI) list 1 corresponds to configuration information 1 of an uplink wake-up signal, and a Cell ID list 2 or a PCI list 2 corresponds to configuration information 2 of an uplink wake-up signal. When the terminal device expects to wake up a cell in the Cell ID list 1 or a cell in the PCI list 1, the terminal device may send the uplink wake-up signal based on the configuration information 1 of the uplink wake-up signal, and the rest can be deduced by analogy.

**Table 3**

| | |
|---|---|
| Cell ID list 1 or PCI list 1 | Configuration information 1 of the uplink wake-up signal |
| Cell ID list 2 or PCI list 2 | Configuration information 2 of the uplink wake-up signal |
| ... | ... |

For example, the broadcast message may include K pieces of configuration information of uplink wake-up signals that are in one-to-one correspondence with K cells. In other words, K uplink wake-up signals are used for waking up the K cells, where K is a positive integer. For example, the broadcast message may include the configuration information of the uplink wake-up signal used for waking up the first cell, configuration information of an uplink wake-up signal for waking up the second cell, and the like.

In another example, the downlink low-power synchronization signal is a synchronization signal having a long periodicity, for example, a periodicity of the downlink low-power synchronization signal is {320 ms, 640 ms, 1280 ms, 2560 ms, 5120 ms, or 10240 ms}. The terminal device may perform time-frequency synchronization based on the downlink low-power synchronization signal. The downlink low-power synchronization signal may be further used for carrying configuration information of an uplink wake-up signal of a corresponding cell.

In still another example, for a terminal device in an inactive (inactive) state and a terminal device in a connected state, the configuration information of the uplink wake-up signal may be carried in the RRC signaling. For example, for the terminal device in the inactive state, the RRC signaling is an RRC release (Release) message. In this case, the uplink wake-up signal configured by using the configuration information of the uplink wake-up signal is used for waking up a last serving cell (and/or another cell) of the terminal device. For the terminal device in the connected state, the RRC signaling is an RRC reconfiguration (reconfiguration) message. In this case, the uplink wake-up signal configured by using the configuration information of the uplink wake-up signal is used for waking up a current serving cell (and/or another cell) of the terminal device. For details, refer to Table 3.

In still another example, the configuration information of uplink wake-up signal may be indicated as 16-bit information. It is assumed that a bit index starts from 0. A bit 0 to a bit 3 indicate the periodicity of the uplink wake-up signal, as shown in Table 2, and a bit 4 to a bit 8 indicate the time domain resource information and the frequency domain resource information of the uplink wake-up signal. For example, the terminal device may obtain a correspondence between a time-frequency resource index and each of the time domain resource information and the frequency domain resource information of the uplink wake-up signal. The correspondence may be predefined according to a protocol or preconfigured, and the bit 4 to the bit 8 may indicate a specific time-frequency resource index. For another example, the bit 4 to the bit 8 indicate a time-frequency resource position of an initial uplink bandwidth part (bandwidth part BWP) of the terminal device and a corresponding offset. A bit 9 and a bit 10 indicate at least one of the following: the network slice group identifier, the network slice identifier, the emergency service identifier, the data radio bearer identifier, or the logical channel identifier, that is, indicate all or part of content of the first information. A bit 11 indicates the buffer threshold. A bit 12 indicates the access identifier. A bit 13 and a bit 14 indicate the maximum quantity of times of sending the uplink wake-up signal. A bit 15 indicates the power ramping step of the uplink wake-up signal. It may be understood that the foregoing bit allocation scheme is merely an example and is not intended to limit this application.

Correspondingly, the network device receives the uplink wake-up signal from the terminal device. For example, the network device receives the uplink wake-up signal through a secondary receiver. When the network device determines to wake up the first cell, the network device may send the synchronization signal/PBCH block or the system information block of the first cell through a main transceiver module. Therefore, the main transceiver module may maintain a sleep state or an energy saving state before the first cell is woken up, to obtain a maximum possible energy saving gain. For example, the secondary receiver may be a module in a low-power transceiver module.

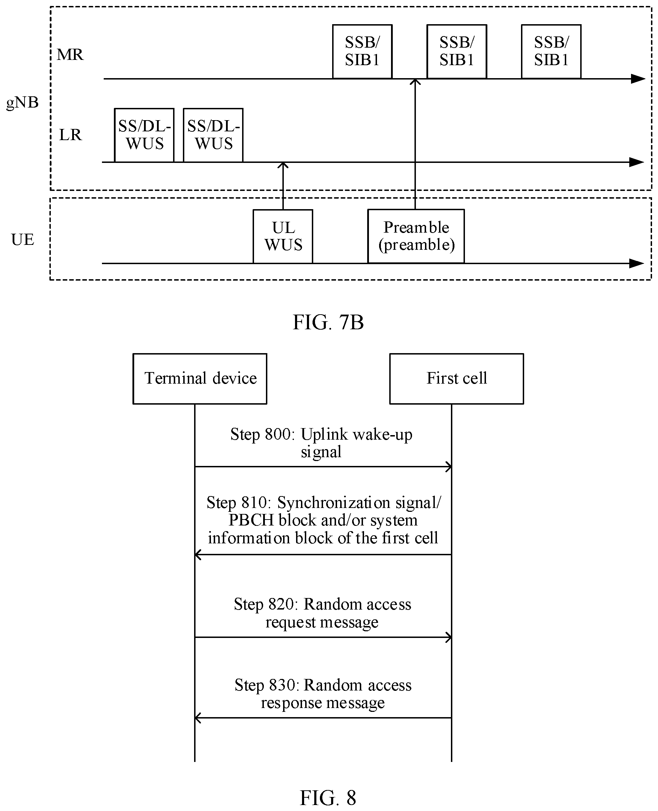

As shown in FIG. 7A, the terminal device sends an uplink wake-up signal through the low-power transceiver module (LR), and the network device receives the uplink wake-up signal through the low-power transceiver module (LR). As shown in FIG. 7B, the terminal device sends an uplink wake-up signal through the main transceiver module (MR) or the low-power transceiver module (LR), and the network device receives the uplink wake-up signal through the low-power transceiver module (LR).

Step 610: The terminal device monitors the synchronization signal/PBCH block and/or the system information block of the first cell.

For example, the synchronization signal/PBCH block is an SSB, and the system information block is a SIB1.

Optionally, in step 620, the network device broadcasts the synchronization signal/PBCH block and/or the system information block of the first cell.

It should be noted that a sequence of step 610 and step 620 is not limited in this application.

In a possible implementation, the network device may broadcast the synchronization signal/PBCH block and/or the system information block of the first cell based on the first indication information. For example, the network device may determine the periodicity of the synchronization signal/PBCH block and/or an index of the synchronization signal/PBCH block of the first cell based on the first indication information.

For example, if the first indication information includes the expected periodicity and/or index of the synchronization signal/PBCH block of the first cell, the network device may determine that the periodicity of the synchronization signal/PBCH block of the first cell is the expected periodicity of the synchronization signal/PBCH block of the first cell, and/or the network device may determine that a beam of the synchronization signal/PBCH block of the first cell is a beam corresponding to the expected index of the synchronization signal/PBCH block of the first cell.

For another example, if the first indication information indicates that the expected periodicity of the synchronization signal/PBCH block of the first cell is less than 160 ms, the network device may determine that the periodicity of the synchronization signal/PBCH block of the first cell is 40 ms.

It may be understood that, after the terminal device sends the uplink wake-up signal, the terminal device may obtain the synchronization signal/PBCH block and/or the system information block of the first cell through monitoring, that is, the first cell is woken up. This is referred to as a scenario 1 below for short. Alternatively, the terminal device may not obtain the synchronization signal/PBCH block and/or the system information block of the first cell through monitoring, that is, the first cell is not woken up. This is referred to as a scenario 2 below for short.

The following separately describes, for the foregoing scenario 1 and scenario 2, a possible procedure of interaction between the terminal device and the network device after the uplink wake-up signal is sent.

It should be noted that the following embodiments shown in FIG. 8, FIG. 9, FIG. 10, and FIG. 12 may be combined with the foregoing embodiment shown in FIG. 4, or may be used as an independent embodiment.

FIG. 8 shows a first possible procedure of interaction between the terminal device and the network device after the uplink wake-up signal is sent in the scenario 1.

Step 800: The terminal device sends an uplink wake-up signal. The uplink wake-up signal is used for waking up a first cell.

Step 810: The first cell broadcasts a synchronization signal/PBCH block and/or a system information block of the first cell.

For example, in response to the uplink wake-up signal, the first cell broadcasts the synchronization signal/PBCH block and/or the system information block of the first cell.

Step 820: The terminal device sends a random access request message.

For example, the terminal device sends the random access request message based on the synchronization signal/PBCH block and/or the system information block of the first cell that are/is detected, where the random access request message is used for requesting to access the first cell.

For example, the terminal device sends the random access request message to the first cell.

Step 830: The first cell sends a random access response message to the terminal device. Correspondingly, the terminal device receives the random access response message from the first cell.

For example, the first cell sends the random access response message based on the received random access request message.

For example, the random access response message may include at least one of the following: a timing advance command (timing advance command), a temporary cell-radio network temporary identifier (cell-radio network temporary identifier, C-RNTI), and an uplink grant (UL grant).

In the embodiment shown in FIG. 8, after the terminal device sends the uplink wake-up signal, if the terminal device wakes up the first cell, the terminal device sends the random access request message based on the received synchronization signal/PBCH block and/or system information block of the first cell.

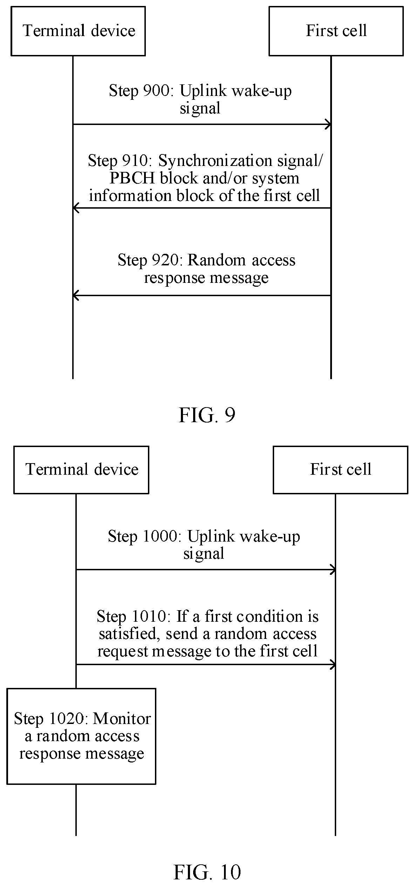

FIG. 9 shows a second possible procedure of interaction between the terminal device and the network device after the uplink wake-up signal is sent in the scenario 1.

Step 900: The terminal device sends an uplink wake-up signal. The uplink wake-up signal is used for waking up a first cell.

For example, the terminal device sends the uplink wake-up signal to the first cell.

Step 910: The first cell broadcasts a synchronization signal/PBCH block and/or a system information block of the first cell.

For example, in response to the uplink wake-up signal, the first cell broadcasts the synchronization signal/PBCH block and/or the system information block of the first cell.

Step 920: The first cell sends a random access response message to the terminal device.

Correspondingly, the terminal device receives the random access response message based on the synchronization signal/PBCH block and/or the system information block of the first cell that are/is detected. The random access response message includes information about the uplink wake-up signal.

For example, the information about the uplink wake-up signal includes all or part of information carried in the uplink wake-up signal sent by the terminal device, or a sequence index of the uplink wake-up signal. For example, when a waveform of the uplink wake-up signal is a harmonized waveform of OOK and OFDM, the information about the uplink wake-up signal may include the sequence index of the uplink wake-up signal.

For example, the random access response message may further include at least one of the following: a timing advance command, a temporary C-RNTI, and an uplink grant.

According to the embodiment shown in FIG. 9, the terminal device does not need to send the random access request message, and the terminal device sends only the uplink wake-up signal. The uplink wake-up signal can implement a function of the random access request message, to reduce a delay of network access of the terminal device.

FIG. 10 shows a first possible procedure of interaction between the terminal device and the network device after the uplink wake-up signal is sent in the scenario 2.

Step 1000: The terminal device sends an uplink wake-up signal. The uplink wake-up signal is used for waking up a first cell.

For example, the terminal device sends the uplink wake-up signal to the first cell.

Step 1010: If a first condition is satisfied, the terminal device sends a random access request message to the first cell.

The first condition includes: it is determined that a maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected.

For example, as shown in FIG. 11, assuming that the maximum quantity of times of sending the uplink wake-up signal is 3, the terminal device sends the random access request message to the first cell three times, and no synchronization signal/PBCH block and/or system information block of the first cell are/is detected, the terminal device sends the random access request message, for example, a preamble, to the first cell. For example, the maximum quantity of times of sending the uplink wake-up signal may be carried in the foregoing configuration information of the uplink wake-up signal, or may be specified in a protocol.

For example, as shown in FIG. 11, it is assumed that the first preset duration is 128 ms. The terminal device sends the random access request message to the first cell, and starts a timer. Duration of the timer is 128 ms. When the timer expires and no synchronization signal/PBCH block and/or system information block of the first cell are/is detected, the terminal device sends the random access request message to the first cell. For example, the first preset duration may be carried in the foregoing configuration information of the uplink wake-up signal, or may be specified in a protocol.

It may be understood that the terminal device may send the uplink wake-up signal to the first cell once or a plurality of times.

For example, the terminal device may determine transmit power for the uplink wake-up signal based on a path loss of the terminal device. For example, the path loss may be determined based on a long-periodicity synchronization signal/PBCH block, a simplified synchronization signal/PBCH block, or a downlink low-power synchronization signal received by the terminal device. In addition, the terminal device may further perform time-frequency synchronization and/or automatic gain control (automatic gain control, AGC) adjustment based on the received long-periodicity synchronization signal/PBCH block, simplified synchronization signal/PBCH block, or downlink low-power synchronization signal. After the terminal device sends the uplink wake-up signal once or a plurality of times, if the terminal device does not obtain the synchronization signal/PBCH block and/or the system information block of the first cell through monitoring, the terminal device may increase the transmit power for the uplink wake-up signal. For example, the terminal device may increase the transmit power for the uplink wake-up signal based on a power ramping step of the uplink wake-up signal. For example, the power ramping step of the uplink wake-up signal may be carried in the foregoing configuration information of the uplink wake-up signal, or may be specified in a protocol.

For example, the random access request message in step 1010 may include a random access sequence, where the random access sequence may also be referred to as a preamble. The random access sequence may be a conventional random access sequence or a specific random access sequence.

In a possible implementation, the terminal device may determine the random access sequence based on third indication information. The third indication information indicates at least one of the following: a root sequence index of the random access request message, a random access sequence index, or an association configuration between a beam of the downlink low-power synchronization signal and the random access sequence.

For example, the downlink low-power synchronization signal herein may be a long-periodicity synchronization signal/PBCH block, a simplified synchronization signal/PBCH block, or a downlink low-power synchronization signal.

For example, the third indication information may further include information about a time-frequency resource occupied by the random access request message, so that the terminal device may send the random access request message based on the information about the time-frequency resource.

In addition, in an example, the third indication information may further include an identifier of the first cell, or the third indication information corresponds to the identifier of the first cell. It indicates that the random access request message determined based on the third indication information corresponds to the first cell. In other words, the random access request message determined based on the third indication information is used for requesting to access the first cell.

For example, the third indication information corresponds to the identifier of the first cell, and the third indication information includes the root sequence index of the random access request message. When sending the random access request message to the first cell, the terminal device determines the random access request message based on the root sequence index of the random access request message in the third indication information.

In another example, as shown in Table 4, the first cell or a third cell may indicate third indication information corresponding to one or more cells. A Cell ID list 1 or a PCI list 1 corresponds to third indication information 1, and a Cell ID list 2 or a PCI list 2 corresponds to third indication information 2. When the terminal device sends the random access request message to a cell in the Cell ID list 1 or a cell in the PCI list 1, the terminal device may determine the random access request message based on the third indication information.

**Table 4**

| | |
|---|---|
| Cell ID list 1 or PCI list 1 | Third indication information 1 |
| Cell ID list 2 or PCI list 2 | Third indication information 2 |
| ... | ... |

In another example, there are W pieces of third indication information, and the W pieces of third indication information is in one-to-one correspondence with identifiers of W cells, where W is a positive integer. In other words, the terminal device may determine the random access request message based on third indication information corresponding to an i^{th} cell in the W cells, where the random access request message is used for requesting to access the i^{th} cell, and 1≤i≤W.

For example, the terminal device may receive the third indication information from the first cell, or the terminal device may receive the third indication information from the third cell.

Corresponding to step 1010, the first cell receives the random access request message from the terminal device. If the random access request message includes a specific random access sequence, the first cell may further send the synchronization signal/PBCH block and/or the system information block. Further, the first cell may send a random access response message to the terminal device.

Step 1020: The terminal device monitors the random access response message.

According to the embodiment shown in FIG. 10, after the terminal device sends the uplink wake-up signal, if the first condition is satisfied, the terminal device may directly send the random access request message to the first cell.

FIG. 12 shows a second possible procedure of interaction between the terminal device and the network device after the uplink wake-up signal is sent in the scenario 2.

Step 1200: The terminal device sends an uplink wake-up signal. The uplink wake-up signal is used for waking up a first cell.

For example, the terminal device sends the uplink wake-up signal to the first cell.

Step 1210: If a first condition is satisfied, the terminal device sends a random access request message to a second cell.

The second cell is a cell reselected by the terminal device or a specified cell. For the first condition, refer to step 1020. For example, the third indication information may further indicate the second cell, that is, the specified cell may be indicated by using the third indication information.

For example, the random access request message in step 1010 may include a random access sequence. The random access sequence may be a conventional random access sequence or a specific random access sequence.

In a possible implementation, the terminal device may determine the random access sequence based on third indication information. For the third indication information, refer to step 1020.

For example, the terminal device may receive the third indication information from the first cell, or the terminal device may receive the third indication information from a third cell. The third cell may be the same as or different from the second cell. This is not limited in this application.

Step 1220: The second cell sends a random access response message to the terminal device.

Optionally, step 1230A: The terminal device sends an identifier of the first cell to the second cell after a random access procedure is completed, so that the second cell wakes up the first cell.

For example, the terminal device sends an RRC uplink information transfer (ULInformationTransfer) message to the second cell, where the message includes the identifier of the first cell.

Optionally, step 1230B: After the random access procedure is completed, the second cell determines, based on the random access request message, that the terminal device expects to wake up the first cell.

In a possible implementation, the second cell may determine, based on a time-frequency resource occupied by the random access request message or a random access sequence used for the random access request message, that a cell that the terminal device expects to activate is the first cell.

Either or both of step 1230A and step 1230B may be performed.

Optionally, in step 1240, the second cell may send a first message to the first cell.

For example, the first message is a cell activation message or a cell wake-up message. Optionally, the first message includes the identifier of the first cell.

According to the embodiment shown in FIG. 12, after the terminal device sends the uplink wake-up signal, if the first condition is satisfied, the terminal device may first access the second cell, and then wake up the first cell via the second cell.

In addition, this application further provides a communication method, so that a terminal device determines to send an uplink wake-up signal or a random access request message, to activate a base station or a cell, and send a synchronization information block and system broadcast information (SIB 1).

In a possible implementation, the terminal device determines, based on second information, whether to send the uplink wake-up signal. If the terminal device satisfies any one or more pieces of information included in the second information, the terminal device sends the uplink wake-up signal; or if the terminal device does not satisfy any one or more pieces of information included in the second information, the terminal device does not send the uplink wake-up signal. The second information may be configured by a network device or specified in a protocol. For waveform information of the uplink wake-up signal, refer to related content in A.

The terminal device determines, based on third information, whether to send the random access request message or a random access preamble. If the terminal device satisfies any one or more pieces of information included in the third information, the terminal device sends the random access request message; or if the terminal device does not satisfy any one or more pieces of information included in the third information, the terminal device does not send the random access request message. The third information may be configured by the network device or specified in a protocol. The second information is different from the third information.

In a possible implementation, the second information indicates an emergency service or a high-priority service. For example, the second information includes at least one of the following information: a first access identifier, a first network slice group identifier, a first network slice identifier, a first emergency service identifier, a first data radio bearer identifier, and a first logical channel identifier.

The third information indicates a non-emergency service or a low-priority service. The third information includes at least one of the following information: a second access identifier, a second network slice group identifier, a second network slice identifier, a second emergency service identifier, a second data radio bearer identifier, and a second logical channel identifier.

In another possible implementation, the terminal device determines, based on second information, whether to send the uplink wake-up signal. If the terminal device satisfies any one or more pieces of information included in the second information, the terminal device sends the uplink wake-up signal; or if the terminal device does not satisfy any one or more pieces of information included in the second information, the terminal device sends the random access request message. In other words, if the terminal device satisfies any one or more pieces of information included in the second information, the terminal device sends the uplink wake-up signal; or if the terminal device determines that none of the information included in the second information is satisfied, the terminal device sends the random access request message. The second information may be configured by the network device or specified in a protocol.

For example, the second information and/or the third information may be indicated by the network device. For example, the indication may be specifically performed by using one of the following: a broadcast message, a downlink low-power synchronization signal, a downlink wake-up signal, or RRC signaling.

For example, a periodicity of the random access request message is greater than a periodicity of the uplink wake-up signal. As shown in FIG. 13, an RACH occasion (RACH occasion, RO) is an occasion on which the network device receives the random access request message or an occasion on which the terminal device sends the random access request message. A UL-WUS occasion is an occasion on which the network device receives the uplink wake-up signal, or an occasion on which the terminal device sends the uplink wake-up signal. The network device receives the uplink wake-up signal through LR, and receives the random access request message through MR.

According to the foregoing method, it can be ensured that, for the emergency service or the high-priority service, a cell can be quickly woken up by using the uplink wake-up signal, and the base station receives the uplink wake-up signal through the LR, so that both quick activation of the cell and energy saving of the base station are implemented. For the non-emergency service or the low-priority service, an existing random access procedure may be used, to activate the cell.

It may be understood that, to implement the functions in the foregoing embodiments, the network device and the terminal include corresponding hardware structures and/or software modules for performing each function. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 14 and FIG. 15 are diagrams of structures of possible communication apparatuses according to embodiments of this application. These communication apparatuses may be configured to implement functions of the terminal or the network device in the foregoing method embodiments. Therefore, beneficial effects of the foregoing method embodiments can also be implemented. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 14, a communication apparatus 1400 includes a processing unit 1410 and a transceiver unit 1420. The communication apparatus 1400 is configured to implement functions of the terminal or the network device in the method embodiments shown in FIG. 6, FIG. 8, FIG. 9, FIG. 10, and FIG. 12.

When the communication apparatus 1400 is configured to implement the functions of the terminal device in the method embodiments shown in FIG. 6, FIG. 8, FIG. 9, FIG. 10, and FIG. 12:
the processing unit 1410 invokes the transceiver unit 1420 to: send an uplink wake-up signal, where the uplink wake-up signal is used for waking up a first cell, the uplink wake-up signal carries first indication information, and the first indication information indicates an expected periodicity and/or beam of a synchronization signal/PBCH block of the first cell; and monitor the synchronization signal/PBCH block and/or a system information block of the first cell.

In a possible design, the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

In a possible design, the transceiver unit 1420 is configured to send the uplink wake-up signal based on configuration information of the uplink wake-up signal during sending of the uplink wake-up signal.

In a possible design, the configuration information of the uplink wake-up signal includes at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

In a possible design, the waveform information of the uplink wake-up signal indicates that a waveform of the uplink wake-up signal is any one of the following: a harmonized waveform of OOK and OFDM, multicarrier amplitude shift keying ASK, multicarrier frequency shift keying FSK, or OFDM.

In a possible design, the configuration information of the uplink wake-up signal further includes first information, the first information includes at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

In a possible design, the configuration information of the uplink wake-up signal is carried in one of the following: a broadcast message, a downlink low-power synchronization signal, a downlink wake-up signal, or radio resource control RRC signaling.

In a possible design, the transceiver unit 1420 is configured to: after sending the uplink wake-up signal, send a random access request message to the first cell based on the synchronization signal/PBCH block and/or the system information block of the first cell that are/is detected.

In a possible design, the transceiver unit 1420 is configured to: after sending the uplink wake-up signal, send the random access request message to the first cell based on that the processing unit 1410 determines that a first condition is satisfied, where the first condition includes: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected.

In a possible design, the transceiver unit 1420 is configured to: after sending the uplink wake-up signal, send the random access request message to the second cell based on that the processing unit 1410 determines that a first condition is satisfied, where the first condition includes: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected; and send an identifier of the first cell to the second cell after a random access procedure is completed.

In a possible design, the second cell is a cell reselected by the terminal device or a specified cell.

In a possible design, the transceiver unit 1420 is configured to receive third indication information from the first cell or a third cell, where the third indication information indicates at least one of the following: information about a time-frequency resource occupied by the random access request message, a root sequence index of the random access request message, a random access sequence index, or an association configuration between a beam of the downlink low-power synchronization signal and a random access sequence.

In a possible design, the transceiver unit 1420 is configured to: after sending the uplink wake-up signal, receive a random access response message from the first cell based on the synchronization signal/PBCH block and/or the system information block of the first cell that are/is detected, where the random access response message includes information about the uplink wake-up signal.

In a possible design, the information about the uplink wake-up signal includes all or part of information carried in the uplink wake-up signal sent by the terminal device, or a sequence index of the uplink wake-up signal.

When the communication apparatus 1400 is configured to implement the functions of the network device in the method embodiments shown in FIG. 6, FIG. 8, FIG. 9, FIG. 10, and FIG. 12:
the processing unit 1410 invokes the transceiver unit 1420 to: receive an uplink wake-up signal, where the uplink wake-up signal is used for waking up a first cell, the uplink wake-up signal carries first indication information, and the first indication information indicates an expected periodicity and/or beam of a synchronization signal/PBCH block of the first cell; and broadcast the synchronization signal/PBCH block and/or a system information block of the first cell.

In a possible design, the transceiver unit 1420 is configured to: receive the uplink wake-up signal through a secondary receiver during receiving of the uplink wake-up signal.

In a possible design, the processing unit 1410 is configured to: before broadcasting the synchronization signal/PBCH block based on the uplink wake-up signal, determine a periodicity of the synchronization signal/PBCH block and/or an index of the synchronization signal/PBCH block based on the first indication information.

In a possible design, the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

In a possible design, the transceiver unit 1420 is configured to: before sending the uplink wake-up signal, send configuration information of the uplink wake-up signal.

In a possible design, the configuration information of the uplink wake-up signal includes at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

In a possible design, the waveform information of the uplink wake-up signal indicates that a waveform of the uplink wake-up signal is any one of the following: a harmonized waveform of OOK and OFDM, multicarrier ASK, multicarrier FSK, or OFDM.

In a possible design, the configuration information of the uplink wake-up signal further includes first information, the first information includes at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

In a possible design, the configuration information of the uplink wake-up signal is carried in one of the following: a broadcast message, a downlink low-power synchronization signal, a downlink wake-up signal, or RRC signaling.

In a possible design, the transceiver unit 1420 is configured to: after broadcasting the synchronization signal/PBCH block and/or the system information block of the first cell based on the uplink wake-up signal, send a random access response message to the terminal device, where the random access response message includes information about the uplink wake-up signal.

In a possible design, the information about the uplink wake-up signal includes all or part of information carried in the uplink wake-up signal sent by the terminal device, or a sequence index of the uplink wake-up signal.

For more detailed descriptions of the processing unit 1410 and the transceiver unit 1420, directly refer to related descriptions of the method embodiments shown in FIG. 6, FIG. 8, FIG. 9, FIG. 10, and FIG. 12. Details are not described herein again.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, store input data that the processor 1510 needs to run instructions, or store data generated after the processor 1510 runs instructions.

When the communication apparatus 1500 is configured to implement the method shown in FIG. 6, FIG. 8, FIG. 9, FIG. 10, or FIG. 12, the processor 1510 is configured to implement the functions of the processing unit 1410, and the interface circuit 1520 is configured to implement the functions of the transceiver unit 1420.

When the communication apparatus is a chip used in a terminal, the chip in the terminal implements functions of the terminal in the method embodiments. The chip in the terminal receives information from another module (for example, a radio frequency module or an antenna) in the terminal, where the information is sent by a network device to the terminal. Alternatively, the chip in the terminal sends information to another module (for example, a radio frequency module or an antenna) in the terminal, where the information is sent by the terminal to the network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal to the network device. Alternatively, the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application provides another example of an apparatus. A notification apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes a processor and a memory. As shown in FIG. 15, the communication apparatus 1500 includes a processor 1510 and a memory 1530. The processor 1510 is coupled to the memory 1530. The memory 1530 stores instructions. When the instructions stored in the memory 1530 are executed by the processor 1510, the communication apparatus 1500 performs the method performed by the network device or the terminal in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. Alternatively, the processor and the storage medium may exist in a network device or a terminal as discrete components.

All or a part of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
sending an uplink wake-up signal, wherein the uplink wake-up signal is used for waking up a first cell, the uplink wake-up signal carries first indication information, and the first indication information indicates an expected periodicity and/or beam of a synchronization signal/PBCH block of the first cell; and
monitoring the synchronization signal/PBCH block and/or a system information block of the first cell.

2. The method according to claim 1, wherein the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

3. The method according to claim 2, wherein sending the uplink wake-up signal comprises:
sending the uplink wake-up signal based on configuration information of the uplink wake-up signal.

4. The method according to claim 3, wherein the configuration information of the uplink wake-up signal comprises at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

5. The method according to claim 4, wherein the waveform information of the uplink wake-up signal indicates that a waveform of the uplink wake-up signal is any one of the following: a harmonized waveform of on-off keying OOK and orthogonal frequency division multiplexing OFDM, multicarrier amplitude shift keying ASK, multicarrier frequency shift keying FSK, or OFDM.

6. The method according to any one of claims 3 to 5, wherein the configuration information of the uplink wake-up signal further comprises first information, the first information comprises at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

7. The method according to any one of claims 3 to 6, wherein the configuration information of the uplink wake-up signal is carried in one of the following: a broadcast message, a downlink low-power synchronization signal, a downlink wake-up signal, or radio resource control RRC signaling.

8. The method according to any one of claims 1 to 7, wherein after sending the uplink wake-up signal, the method further comprises:
sending the random access request message to the first cell based on the synchronization signal/PBCH block and/or the system information block of the first cell that are/is detected.

9. The method according to any one of claims 1 to 7, wherein after sending the uplink wake-up signal, the method further comprises:
sending the random access request message to the first cell if a first condition is satisfied, wherein
the first condition comprises: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected.

10. The method according to any one of claims 1 to 7, wherein after sending the uplink wake-up signal, the method further comprises:
sending the random access request message to the second cell if a first condition is satisfied, wherein the first condition comprises: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected; and
sending an identifier of the first cell to the second cell after a random access procedure is completed.

11. The method according to claim 10, wherein the second cell is a cell reselected by the terminal device or a specified cell.

12. The method according to any one of claims 9 to 11, further comprising:
receiving third indication information from the first cell or a third cell, wherein the third indication information indicates at least one of the following: information about a time-frequency resource occupied by the random access request message, a root sequence index of the random access request message, the random access sequence index, or an association configuration between a beam of the downlink low-power synchronization signal and a random access sequence.

13. The method according to any one of claims 1 to 7, wherein after sending the uplink wake-up signal, the method further comprises:
receiving a random access response message from the first cell based on the synchronization signal/PBCH block and/or the system information block of the first cell that are/is detected, wherein the random access response message comprises information about the uplink wake-up signal.

14. The method according to claim 13, wherein the information about the uplink wake-up signal comprises all or part of information carried in the uplink wake-up signal sent by the terminal device, or a sequence index of the uplink wake-up signal.

15. A communication method, wherein the method comprises:
receiving the uplink wake-up signal, wherein the uplink wake-up signal is used for waking up a first cell, the uplink wake-up signal carries first indication information, and the first indication information indicates an expected periodicity and/or beam of a synchronization signal/PBCH block of the first cell; and
broadcasting the synchronization signal/PBCH block and/or a system information block of the first cell.

16. The method according to claim 15, wherein receiving the uplink wake-up signal comprises:
receiving the uplink wake-up signal through a secondary receiver.

17. The method according to claim 15 or 16, wherein before broadcasting the synchronization signal/PBCH block based on the uplink wake-up signal, the method comprises:
determining a periodicity of the synchronization signal/PBCH block and/or an index of the synchronization signal/PBCH block based on the first indication information.

18. The method according to any one of claims 15 to 17, wherein the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

19. The method according to claim 18, wherein before sending the uplink wake-up signal, the method comprises:
sending configuration information of the uplink wake-up signal.

20. The method according to claim 19, wherein the configuration information of the uplink wake-up signal comprises at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

21. The method according to claim 19, wherein the waveform information of the uplink wake-up signal indicates that a waveform of the uplink wake-up signal is any one of the following: a harmonized waveform of OOK and OFDM, the multicarrier ASK, multicarrier FSK, or OFDM.

22. The method according to any one of claims 19 to 21, wherein the configuration information of the uplink wake-up signal further comprises first information, the first information comprises at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

23. The method according to any one of claims 19 to 22, wherein the configuration information of the uplink wake-up signal is carried in one of the following: a broadcast message, a downlink low-power synchronization signal, a downlink wake-up signal, or radio resource control RRC signaling.

24. The method according to any one of claims 15 to 23, wherein after broadcasting the synchronization signal/PBCH block and/or the system information block of the first cell based on the uplink wake-up signal, the method further comprises:
sending a random access response message to the terminal device, wherein the random access response message comprises information about the uplink wake-up signal.

25. The method according to claim 24, wherein the information about the uplink wake-up signal comprises all or part of information carried in the uplink wake-up signal sent by the terminal device, or a sequence index of the uplink wake-up signal.

26. A communication apparatus, wherein the apparatus comprises a processing unit and a transceiver unit, and the processing unit invokes the transceiver unit to: send an uplink wake-up signal, wherein the uplink wake-up signal is used for waking up a first cell, the uplink wake-up signal carries first indication information, and the first indication information indicates an expected periodicity and/or beam of a synchronization signal/PBCH block of the first cell; and monitor the synchronization signal/PBCH block and/or a system information block of the first cell.

27. The apparatus according to claim 26, wherein the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

28. The apparatus according to claim 27, wherein the transceiver unit is configured to send the uplink wake-up signal based on configuration information of the uplink wake-up signal during sending of the uplink wake-up signal.

29. The apparatus according to claim 28, wherein the configuration information of the uplink wake-up signal comprises at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

30. The apparatus according to claim 29, wherein the waveform information of the uplink wake-up signal indicates that a waveform of the uplink wake-up signal is any one of the following: a harmonized waveform of OOK and OFDM, the multicarrier amplitude shift keying ASK, multicarrier frequency shift keying FSK, or OFDM.

31. The apparatus according to any one of claims 28 to 30, wherein the configuration information of the uplink wake-up signal further comprises first information, the first information comprises at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

32. The apparatus according to any one of claims 28 to 31, wherein the configuration information of the uplink wake-up signal is carried in one of the following: a broadcast message, a downlink low-power synchronization signal, a downlink wake-up signal, or RRC signaling.

33. The apparatus according to any one of claims 26 to 32, wherein the transceiver unit is configured to: after sending the uplink wake-up signal, send the random access request message to the first cell based on the synchronization signal/PBCH block and/or the system information block of the first cell that are/is detected.

34. The apparatus according to any one of claims 26 to 32, wherein the transceiver unit is configured to: after sending the uplink wake-up signal, send the random access request message to the first cell based on that the processing unit determines that a first condition is satisfied, wherein the first condition comprises: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected.

35. The apparatus according to any one of claims 26 to 32, wherein the transceiver unit is configured to: after sending the uplink wake-up signal, send the random access request message to the second cell based on that the processing unit determines that a first condition is satisfied, wherein the first condition comprises: it is determined that the maximum quantity of times of sending the uplink wake-up signal is reached, and the synchronization signal/PBCH block and/or the system information block of the first cell are/is not detected; and/or since a 1^{st} time of sending the uplink wake-up signal, it is determined that first preset duration elapses, and the synchronization signal/PBCH block and/or the system information block of the first cell are/is not detected; and send an identifier of the first cell to the second cell after a random access procedure is completed.

36. The apparatus according to claim 35, wherein the second cell is a cell reselected by the terminal device or a specified cell.

37. The apparatus according to any one of claims 34 to 36, wherein the transceiver unit is configured to receive third indication information from the first cell or a third cell, wherein the third indication information indicates at least one of the following: information about a time-frequency resource occupied by the random access request message, a root sequence index of the random access request message, the random access sequence index, or an association configuration between a beam of the downlink low-power synchronization signal and a random access sequence.

38. The apparatus according to any one of claims 26 to 32, wherein the transceiver unit is configured to: after sending the uplink wake-up signal, receive a random access response message from the first cell based on the synchronization signal/PBCH block and/or the system information block of the first cell that are/is detected, wherein the random access response message comprises information about the uplink wake-up signal.

39. The apparatus according to claim 38, wherein the information about the uplink wake-up signal comprises all or part of information carried in the uplink wake-up signal sent by the terminal device, or a sequence index of the uplink wake-up signal.

40. A communication apparatus, wherein the apparatus comprises a processing unit and a transceiver unit, and the processing unit invokes the transceiver unit to: receive the uplink wake-up signal, wherein the uplink wake-up signal is used for waking up a first cell, the uplink wake-up signal carries first indication information, and the first indication information indicates an expected periodicity and/or beam of a synchronization signal/PBCH block of the first cell; and broadcast the synchronization signal/PBCH block and/or a system information block of the first cell.

41. The apparatus according to claim 40, wherein the transceiver unit is configured to: receive the uplink wake-up signal through a secondary receiver during receiving of the uplink wake-up signal.

42. The apparatus according to claim 40 or 41, wherein the processing unit is configured to: before broadcasting the synchronization signal/PBCH block based on the uplink wake-up signal, determine a periodicity of the synchronization signal/PBCH block and/or an index of the synchronization signal/PBCH block based on the first indication information.

43. The apparatus according to any one of claims 40 to 42, wherein the uplink wake-up signal further carries second indication information, and the second indication information indicates at least one of the following: a second cell that is expected to be woken up, whether an uplink data buffer size of a terminal device is greater than or equal to a buffer threshold, whether a path loss of the terminal device is greater than or equal to a path loss threshold, or whether the terminal device is a reduced capability device.

44. The apparatus according to claim 43, wherein the transceiver unit is configured to: before sending the uplink wake-up signal, send configuration information of the uplink wake-up signal.

45. The apparatus according to claim 44, wherein the configuration information of the uplink wake-up signal comprises at least one of the following: waveform information of the uplink wake-up signal, a quantity of bits carried in one symbol occupied by the uplink wake-up signal, time domain resource information of the uplink wake-up signal, frequency domain resource information of the uplink wake-up signal, a maximum quantity of times of sending the uplink wake-up signal, a power ramping step of the uplink wake-up signal, the buffer threshold, or the path loss threshold.

46. The apparatus according to claim 44, wherein the waveform information of the uplink wake-up signal indicates that a waveform of the uplink wake-up signal is any one of the following: a harmonized waveform of OOK and OFDM, the multicarrier ASK, multicarrier FSK, or OFDM.

47. The apparatus according to any one of claims 44 to 46, wherein the configuration information of the uplink wake-up signal further comprises first information, the first information comprises at least one of the following information: an access identifier, a network slice group identifier, a network slice identifier, an emergency service identifier, a data radio bearer identifier, and a logical channel identifier, and the first information is used by the terminal device to determine whether to send the uplink wake-up signal.

48. The apparatus according to any one of claims 44 to 47, wherein the configuration information of the uplink wake-up signal is carried in one of the following: a broadcast message, a downlink low-power synchronization signal, a downlink wake-up signal, or RRC signaling.

49. The apparatus according to any one of claims 40 to 48, wherein the transceiver unit is configured to: after broadcasting the synchronization signal/PBCH block and/or the system information block of the first cell based on the uplink wake-up signal, send a random access response message to the terminal device, wherein the random access response message comprises information about the uplink wake-up signal.

50. The apparatus according to claim 49, wherein the information about the uplink wake-up signal comprises all or part of information carried in the uplink wake-up signal sent by the terminal device, or a sequence index of the uplink wake-up signal.

51. A communication apparatus, comprising one or more processors and one or more memories, wherein the one or more memories store one or more programs, and when the program is executed by the one or more processors, the apparatus is caused to perform the method according to any one of claims 1 to 14 or the method according to any one of claims 15 to 25.

52. A readable storage medium, wherein the readable storage medium comprises a program, and when the program is run on an apparatus, the apparatus is caused to perform the method according to any one of claims 1 to 14 or the method according to any one of claims 15 to 25.

53. A computer program product, wherein the computer program product comprises a computer program or instructions, and when the computer program or the instructions is/are executed by a communication apparatus, the method according to any one of claims 1 to 14 is implemented, or the method according to any one of claims 15 to 25 is implemented.

54. A computer program, wherein when the computer program is run on a computer, the computer is caused to perform the method according to any one of claims 1 to 14, or perform the method according to any one of claims 15 to 25.

55. A communication apparatus, wherein the apparatus comprises an interface circuit, the interface circuit is configured to provide a program or input and/or output of instructions for at least one processor, and the at least one processor is configured to execute the program or the instructions, to cause the communication apparatus to implement the method according to any one of claims 1 to 14, or implement the method according to any one of claims 15 to 25.

56. The apparatus according to claim 55, wherein the communication apparatus comprises the at least one memory, and the at least one memory is configured to store the program or the instructions.

57. A chip system, wherein the chip system comprises at least one chip and a memory, and the at least one chip is configured to read and execute a program stored in the memory, to implement the method according to any one of claims 1 to 14, or implement the method according to any one of claims 15 to 25.

58. A communication system, wherein the system comprises at least one terminal device and a network device, the terminal performs the method according to any one of claims 1 to 14, and the network device performs the method according to any one of claims 15 to 25.
